## Europäisches Patentamt

## European Patent Office

## Office européen des brevets

(11) Veröffentlichungsnummer: **0 339 700**
**A2**

# (12) EUROPÄISCHE PATENTANMELDUNG

(21) Anmeldenummer: 89200824.4

(51) Int. Cl.⁴: **B01D 3/20**

(22) Anmeldetag: 31.03.89

(30) Priorität: 27.04.88 DE 3814255

(43) Veröffentlichungstag der Anmeldung:
02.11.89 Patentblatt 89/44

(84) Benannte Vertragsstaaten:
BE DE ES FR GB IT NL SE

(71) Anmelder: METALLGESELLSCHAFT AG
Reuterweg 14 Postfach 3724
D-6000 Frankfurt/M.1(DE)

(72) Erfinder: Saft, Helmut
Hans-Böckler-Strasse 8
D-6360 Friedberg 5(DE)

(54) Vorrichtung zum Desodorieren von organischen Flüssigkeiten.

(57) In der Desodoriervorrichtung werden organische Flüssigkeiten, z.B. Speiseöle oder Speisefette, durch Strippen mit Wasserdampf bei unteratmosphärischem Druck und Temperaturen von etwa 130 bis 260° C behandelt. Hierdurch werden freie Fettsäuren sowie störende Geschmacks- und Geruchsstoffe entfernt. Die zu behandelnde Flüssigkeit wird durch eine oder mehrere Behandlungsetagen geleitet und dabei durch aufwärts strömenden Wasserdampf bewegt. Mindestens eine der Behandlungsetagen weist einen oder mehrere konzentrische, oben offene Ringkanäle auf, wobei sich in jedem Ringkanal mehrere, aufwärts durchströmbare Umwälzzylinder befinden. Durch die Umwälzzylinder wird Wasserdampf in feinblasiger Form geleitet. Jede Behandlungsetage kann z.B. mindestens zwei konzentrische Ringkanäle aufweisen.

Fig.1

## Vorrichtung zum Desodorieren von organischen Flüssigkeiten

Die Erfindung betrifft eine Vorrichtung zum Desodorieren von organischen Flüssigkeiten durch Strippen mit Wasserdampf bei unteratmosphärischem Druck und Temperaturen von etwa 130 bis 260 °C, wobei die zu behandelnde Flüssigkeit durch eine oder mehrere Behandlungsetagen geleitet und dabei durch aufwärts strömenden Wasserdampf bewegt wird.

Desodoriervorrichtungen dieser Art sind bekannt, sie dienen üblicherweise dazu, vor allem freie Fettsäuren sowie störende Geschmacks- und Geruchsstoffe z.B. aus Speiseölen oder Speisefetten zu entfernen. Üblicherweise geschieht dies bei einem Druck im Bereich von etwa 2 bis 8 mbar. Bei der Behandlung arbeitet man unterhalb der Siedetemperatur der Flüssigkeit, zu hohe Temperaturen beeinträchtigen den Geschmack des behandelten Produkts.

Der Erfindung liegt die Aufgabe zugrunde, eine möglichst wirksame Desodoriervorrichtung zu schaffen und die zu behandelnde Flüssigkeit ohne Totzonen durch die Vorrichtung zu leiten. Erfindungsgemäß geschieht dies dadurch, daß mindestens eine der Behandlungsetagen einen oder mehrere konzentrische, oben offene Ringkanäle aufweist und in jedem Ringkanal mehrere, aufwärts durchströmbare Umwälzzylinder angeordnet sind, die im unteren Bereich einen Wasserdampf-Einlaß aufweisen. Üblicherweise werden die Behandlungsetagen, zumindest eine davon, mindestens zwei konzentrische Ringkanäle aufweisen.

Die in den Ringkanälen sitzenden Umwälzzylinder können unterschiedlich ausgebildet sein. Eine Möglichkeit der Ausbildung ist, hierfür ein kurzes Rohr zu verwenden. Bei einer verbesserten Ausgestaltung weist der Umwälzzylinder eine konische, sich nach oben erweiternde Form auf, wobei der Konuswinkel, gemessen gegen die Senkrechte, 5 bis 20 ° beträgt. Die Höhe der Umwälzzylinder liegt im Bereich von 0,3 bis 1,5 m.

Ebenso lassen sich für den Wasserdampf-Einlaß verschiedene Arten von Düsen verwenden, wobei es darauf ankommt, den Wasserdampf möglichst feinblasig und gut verteilt in den inneren Bereich des Umwälzzylinders einzubringen. Vorzugsweise verwendet man hierfür einen Leitungsring mit zahlreichen Bohrungen. Bei der konischen Form des Umwälzzylinders, die sich nach oben öffnet, steigen die Wasserdampfbläschen mit verringerter Geschwindigkeit auf. Durch eine vergrößerte Aufenthaltszeit des Wasserdampfs im Bereich des Umwälzzylinders, in welchem sich auch die zu behandelnde Flüssigkeit befindet, wird der Kontakt zwischen Dampf und Flüssigkeit verstärkt und die Mitnahme der unerwünschten Stoffe durch den Wasserdampf verbessert.

Ausgestaltungsmöglichkeiten der Desodoriervorrichtung werden mit Hilfe der Zeichnung erläutert. Es zeigt:

Fig. 1 eine Desodoriervorrichtung im Längsschnitt in stark schematisierter Darstellung,

Fig. 2 einen konischen Umwälzzylinder im Längsschnitt,

Fig. 3 die Draufsicht auf einen Leitungsring zum Einleiten von Wasserdampf und

Fig. 4 einen etwas vergrößerten Querschnitt nach der Linie (I-I) durch eine Behandlungsetage der Fig. 1.

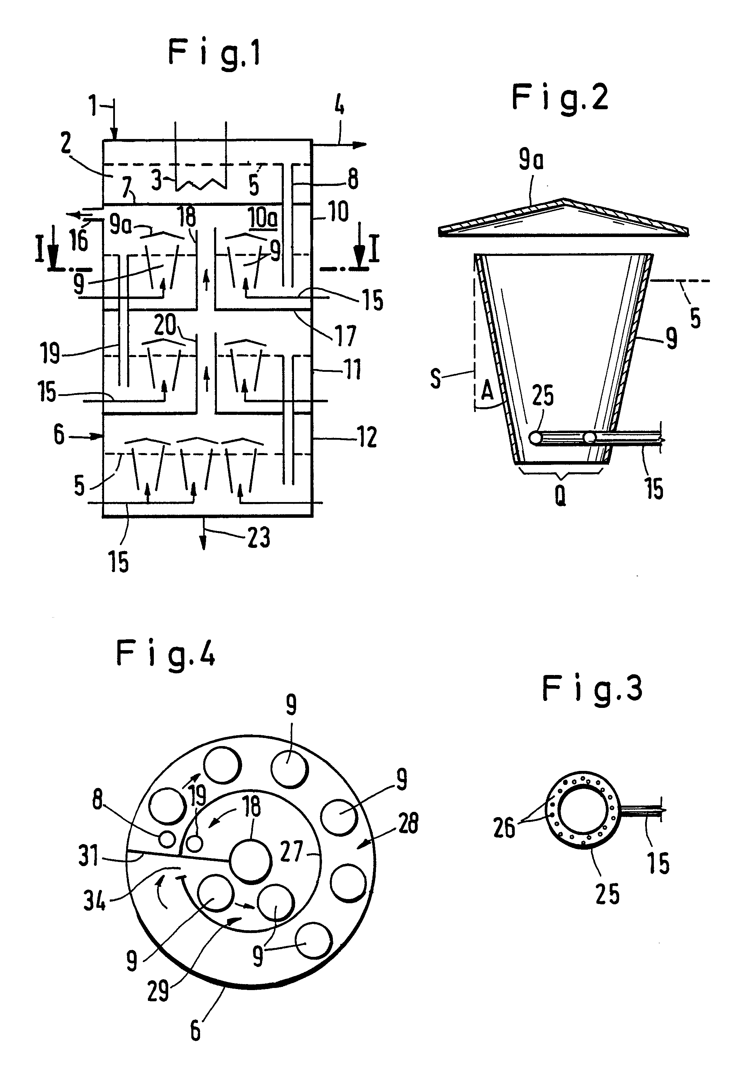

Die zu behandelnde Flüssigkeit, z.B. Speiseöl oder Speisefett, wird durch die Leitung (1) bereits in flüssiger Form der Desodoriervorrichtung, die in Fig. 1 schematisch dargestellt ist, zugeführt. Die Vorrichtung ist als Kolonne mit zylindrischer Gehäusewand (6), vgl. auch Fig. 4, ausgebildet. Die Flüssigkeit gelangt zunächst in eine Heizkammer (2), die eine Beheizung (3) enthält, und wird dort auf Temperaturen von 180 bis 260 °C erhitzt. Dabei entstehende Gase und Dämpfe können durch die Leitung (4) abgeführt werden. Durch eine horizontale gestrichelte Linie (5) ist in der Kammer (2) der Flüssigkeitsstand angedeutet, wie das auch für die nachfolgend beschriebenen Behandlungsetagen der Desodoriervorrichtung gilt.

Die Kammer (2) weist einen flüssigkeitsdichten Boden (7) und ein Abflußrohr (8) auf, durch welches die Flüssigkeit in die oberste Behandlungsetage (10) gelangt. Diese Etage enthält zahlreiche Umwälzzylinder (9), von denen in Fig. 1 der besseren Übersichtlichkeit wegen nur zwei dargestellt sind. Jedem Umwälzzylinder wird von außen durch eine Leitung (15) Wasserdampf zugeführt, der feinblasig im Zylinder (9) aufwärts strömt, dabei nach dem Mammutprinzip Flüssigkeit bewegt und unerwünschte Stoffe zunächst in den Gasraum (10a) der Behandlungsetage mitnimmt. Von dort werden Gase und Dämpfe durch den Auslaß (16) abgesaugt. Zu jedem Umwälzzylinder (9) gehört ein Prallschirm (9a), der sich im Gasraum befindet und insbesondere dafür sorgt, daß Flüssigkeitströpfchen gefangen und in die Flüssigkeit zurückgeleitet werden.

Der Boden (17) der Behandlungsetage (10) weist einen zentralen Kamin (18) auf, durch den Gase und Dämpfe von der darunterliegenden Behandlungsetage (11) nach oben zum Gasraum (10a) und dann zum Auslaß (16) geleitet werden.

Die Behandlungsetage (11) ist prinzipiell genauso ausgebildet wie die Etage (10). Flüssigkeit wird ihr von der darüberliegenden Etage (10) durch das Abflußrohr (19) zugeführt. Von der Etage (11) gelangt die Flüssigkeit dann in die unterste Behandlungsetage (12), die im Unterschied zu den darüberliegenden Etagen (10) und (11) keinen zentralen Kamin aufweist. Gase und Dämpfe strömen von der untersten Etage (12) zunächst durch den Kamin (20) und dann durch den Kamin (18) zum Auslaß (16). Behandelte Flüssigkeit zieht man in der Leitung (23) ab und wird sie zunächst durch eine Kühlvorrichtung führen, die auch in die Desodoriervorrichtung integriert sein kann, was aber in der Zeichnung weggelassen wurde.

Der in Fig. 2 vergrößert dargestellte Umwälzzylinder (9) hat die Form eines sich nach oben öffnenden konischen Rohrs. Der Konuswinkel (A), gemessen gegen die Senkrechte (S), beträgt 5 bis 20°. Über dem Zylinder (9) befindet sich in einigem Abstand ein Prallschirm (9a), der dafür sorgt, daß durch den aufsteigenden Wasserdampf mitgerissene Flüssigkeitströpfchen aufgefangen und zurück in die Flüssigkeit geleitet werden. Im Einsatz ragt der Zylinder (9) etwas über den Flüssigkeitsspiegel hinaus, wie das durch die gestrichelte Linie (5), die den Flüssigkeitsspiegel darstellen soll, angedeutet ist.

Der die Behandlung bewirkende Wasserdampf wird in der Leitung (15) einem jeden Umwälzzylinder (9) zugeführt, vgl. Fig. 1 bis 3, und tritt über einen Leitungsring (25), der in Fig. 3 in Draufsicht zu sehen ist, in das Innere des Zylinders (9) hinein aus. Der Leitungsring (25) ist mit zahlreichen Bohrungen (26), vgl. Fig. 3, versehen, durch welche der Wasserdampf austritt. Hierdurch wird die gewünschte feindisperse Verteilung des Wasserdampfs erreicht, auch ist durch den Leitungsring sichergestellt, daß der Wasserdampf im Umwälzzylinder (9) alle Bereiche im Inneren des Zylinders durchströmt und sich keine zentral aufsteigenden großen Blasen bilden.

Üblicherweise hat der Umwälzzylinder (9), vgl. insbesondere Fig. 2, eine Höhe von 0,3 bis 1,5 m, ohne Berücksichtigung des Prallschirms (9a). Das Verhältnis von kleinstem Querschnitt (Q) zur Höhe des Zylinders liegt im Bereich von 1:3 bis 1:15.

Fig. 4 zeigt im horizontalen Schnitt in schematischer Darstellung eine Möglichkeit der Ausgestaltung einer Behandlungsetage. Hierbei ist konzentrisch zum zentralen Kamin (18) eine senkrechte, zylindrische, mit dem Etagenboden flüssigkeitsdicht verbundene Wand (27) vorhanden, durch welche mit der Gehäusewand (6) ein äußerer Ringkanal (28) und mit dem Kamin (18) ein innerer Ringkanal (29) ausgebildet werden. In den beiden Ringkanälen (28) und (29) sind in regelmäßigen Abständen Umwälzzylinder (9) eingebaut, von denen in Fig. 4 wegen besserer Übersichtlichkeit der Zeichnung nur einige angedeutet sind. Zwischen der Gehäusewand (6) und dem zentralen Kamin (18) verläuft eine senkrechte Trennwand (31). Die Wände (27) und (31) sind etwa so hoch wie der Kamin (18), so daß in jeder Behandlungsetage der Gasraum (10a) (vgl. Fig. 1) für Gase und Dämpfe frei durchströmbar bleibt. In Fig. 1 sind die Wände (27) und (31) nicht eingezeichnet.

Die zu behandelnde Flüssigkeit gelangt durch die Zuleitung (8) zunächst in den äußeren Ringkanal (28), den sie im Uhrzeigersinn durchströmt. Dabei fließt sie von einem Umwälzzylinder (9) zum anderen und wird jeweils mit gewisser Verweilzeit mit Wasserdampf behandelt. Die Zuleitungen für den Wasserdampf wurden in Fig. 4 weggelassen. Schließlich fließt die Flüssigkeit durch den Durchlaß (34) in der zylindrischen Wand (27) in den inneren Ringkanal (29), den sie entgegen dem Uhrzeigersinn durchströmt. Auch im Kanal (29), der mit Umwälzzylindern (9) dicht besetzt ist, wird die Flüssigkeit in den Zylindern (9) nacheinander behandelt. Schließlich gelangt die Flüssigkeit in das Abflußrohr (19) und fließt in die nächstniedrigere Behandlungsetage.

Jede Behandlungsetage kann mit mehreren, nacheinander durchflossenen Ringkanälen oder auch nur mit einem einzigen Ringkanal ausgestattet sein. In den Ringkanälen sind die Umwälzzylinder (9) auf einem Kreis angeordnet. Auch die unterste Behandlungsetage (12) kann einen oder mehrere solcher Ringkanäle aufweisen. Die Zahl der Behandlungsetagen ist variabel, sie schwankt üblicherweise zwischen eins und fünf.

**Ansprüche**

1. Vorrichtung zum Desodorieren von organischen Flüssigkeiten durch Strippen mit Wasserdampf bei unteratmosphärischem Druck und Temperaturen von etwa 130 bis 260°C, wobei die zu behandelnde Flüssigkeit durch eine oder mehrere Behandlungsetagen geleitet und dabei durch aufwärts strömenden Wasserdampf bewegt wird, dadurch gekennzeichnet, daß mindestens eine der Behandlungsetagen einen odere mehrere konzentrische, oben offene Ringkanäle aufweist und in jedem Ringkanal mehrere, aufwärts durchströmbare Umwälzzylinder angeordnet sind, die im unteren Bereich einen Wasserdampf-Einlaß aufweisen.

2. Vorrichtung nach Anspruch 1, dadurch gekennzeichnet, daß die Behandlungsetage mindestens zwei konzentrische Ringkanäle aufweist.

3. Vorrichtung nach Anspruch 1 oder 2, dadurch gekennzeichnet, daß die Umwälzzylinder eine konische, sich nach oben erweiternde Form haben und der Konuswinke (A), gemessen gegen die Senkrechte, 5 bis 20° beträgt.

4. Vorrichtung nach Anspruch 1 oder einem der folgenden, dadurch gekennzeichnet, daß der Wasserdampf-Einlaß als Leitungsring mit zahlreichen Bohrungen ausgebildet ist.

EP 0 339 700 A2

Fig.1

Fig.2

Fig.4

Fig.3